**Europäisches Patentamt**

**European Patent Office**

**Office européen des brevets**

(11) Veröffentlichungsnummer: **0 178 641**
A2

(12) **EUROPÄISCHE PATENTANMELDUNG**

(21) Anmeldenummer: 85113103.7

(22) Anmeldetag: 16.10.85

(51) Int. Cl.⁴: **H 02 G 7/14**

(30) Priorität: 17.10.84 DE 3437958
17.11.84 DE 3442077

(43) Veröffentlichungstag der Anmeldung:
23.04.86 Patentblatt 86/17

(84) Benannte Vertragsstaaten:
AT BE CH DE LI NL SE

(71) Anmelder: RICHARD BERGNER GMBH & CO
Bahnhofstrasse 8-16
D-8540 Schwabach(DE)

(72) Erfinder: Hagedorn, Peter, Prof. Dr.-Ing.
Auf der Letteilung 22
D-6104 Seeheim-Jugenheim(DE)

(74) Vertreter: Tergau, Enno et al,
Patentanwälte Tergau & Pohl Postfach 11 93 47
Hefnersplatz 3
D-8500 Nürnberg 11(DE)

(54) Vorrichtung zur Dämpfung der Querschwingung von Freileiterseilen.

(57) Bei einer Vorrichtung zur Dämpfung der Querschwingung in Freileiterseilen (2) ist ein Massekörper (3) torsionsstarr am Leiterseil (2) befestigt, dessen Massemittelpunkt (7)
in Ruhelage außerhalb einer in Seillängsrichtung durch die
Seilachse (4) gelegten Vertikalebene (6) liegt.

Fig. 1

Torsionsschwingungen

Querschwingungen

Richard Bergner GmbH + Co, 8540 Schwabach

<u>Vorrichtung zur Dämpfung der Querschwingung
von Freileiterseilen</u>

Die Erfindung betrifft eine Vorrichtung zur Dämpfung der Querschwingung in über weite Strecken gespannten Seilen, insbesondere in Freileiterseilen, mit den im Oberbegriff des Anspruches 1 aufgeführten Merkmalen.

Es ist bekannt, daß Freileiterseile zwei unterschiedlichen Arten von Schwingungsmoden ausgesetzt sind, nämlich den Querschwingungen und den Torsionsschwingungen. Dabei ist die Beherrschung von Torsionsschwingungen weniger problematisch, da diese eine große Eigendämpfung auch für niedrige Frequenzen aufweisen. Anders hingegen verhält es sich mit den im wesentlichen in einer in Seillängsrichtung verlaufenden, durch die Seilmitte gelegten Vertikalebene wirksamen Querschwingungen, da deren Eigendämpfung insbesondere bei hohen Seilzugkräften, d.h. bei großen Spannweiten der Freileiterseile, sehr gering ist. Eine aus DE-PS 30 11 555 bekannte Vorrichtung zur Erniedrigung von Torsionsschwingungsfrequenzen enthält einen am Leiterseil torsionsstarr befestigten Massekörper, dessen Massenzentrum unter dem Einfluß seines Eigengewichtes in Ruhelage lotrecht unterhalb des Leiterseiles liegt. Die von dieser Vorrichtung ausgehenden Dämpfungswirkungen auf Querschwingungen sind indessen begrenzt.

Der Erfindung liegt die Aufgabe zugrunde, bei einer Vorrichtung der eingangs genannten Art die Dämpfungswirkungen auf Querschwingungen zu verbessern. Hierzu gibt es bisher lediglich für höherfrequente Schwingungen (10 bis 50 Hz) praktikable Lösungen, die beispielsweise im Anbringen eines Dämpfers vom Typ Stockbridge oder einer vergleichbaren Vorrichtung bestehen. Indessen werden dadurch unter 10 Hz liegende, niederfrequente Leiterseilschwingungen nicht zufriedenstellend gedämpft.

Die der Erfindung zugrunde liegende Aufgabe wird durch die Kennzeichnungsmerkmale des Anspruches 1 gelöst. Die Erfindung macht sich dabei die bereits eingangs genannte Erkenntnis zunutze, daß die Seileigendämpfung zwar für Querschwingungen sehr gering, für Torsionsschwingungen jedoch im allgemeinen wesentlich größer ist. Durch die erfindungsgemäße Vorrichtung werden die Querschwingungen, die z.B. durch Wind überwiegend angeregt werden, an die Torsionsschwingungen gekoppelt. Durch diese Koppelung gelingt es, den Querschwingungen zusätzlich Energie zu entziehen, die in den Torsionsschwingungen vernichtet wird. Auf diese Weise können sowohl die niederfrequenten Tanzschwingungen und ähnliche Erscheinungen vermieden, als auch die höherfrequenten Schwingungen gedämpft werden. Wenn es im Kennzeichen des Anspruches 1 heißt, daß der Massenmittelpunkt des Dämpfungskörpers in Ruhelage außerhalb einer in Seillängsrichtung verlaufenden, durch die Seilmitte gelegten Vertikalebene liegen soll, so schließt diese Lösung ein, daß keine der drei Trägheitshauptachsen des Massekörpers in Ruhelage mit der geometrischen Achse des Seiles übereinstimmt oder rechtwinklig zu dieser steht.

In den Unteransprüchen sind vorteilhafte Ausgestaltungsmerkmale des Erfindungsgegenstandes niedergelegt.

Die Erfindung wird an Hand eines in den Figuren dargestellten Ausführungsbeispieles näher erläutert. Es zeigen:

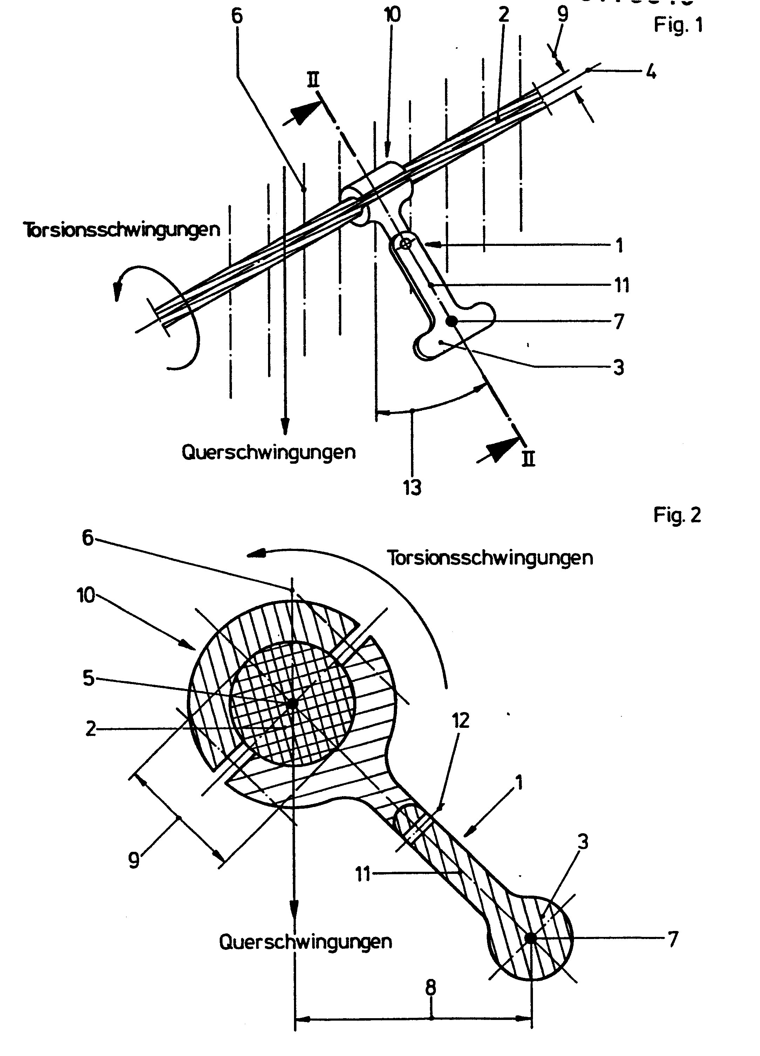

Fig. 1   eine perspektivische Ansicht der erfindungsgemäßen Vorrichtung,

Fig. 2   einen Querschnitt entsprechend der Linie II-II in Fig. 1 durch die Vorrichtung und das Leiterseil.

Die insgesamt mit 1 bezeichnete Vorrichtung enthält den am Leiterseil 2 torsionsstarr befestigten Massekörper 3, dessen Schwerpunkt außerhalb der geometrischen Leiterseilachse 4 liegt. Der Massenmittelpunkt des Massekörpers 3 befindet sich in Ruhelage außerhalb einer in Seillängsrichtung mittig verlaufenden, durch die Seilmitte 5 gelegten Vertikalebene 6.

Der Abstand 8 des Massenmittelpunkts 7 von der durch die Leiterseilachse 4 verlaufenden Vertikalebene 6 ist größer als der Seildurchmesser 9. Der Massekörper 3 ist über einen Ausleger 11 mittels einer Seilklemme 10 am Leiterseil 2 befestigt. Zwischen Leiterseil 2 und Massekörper 3 ist zur Vermeidung der Übertragung von höheren Biegespannungen oder Biegemomenten auf das Leiterseil 2 eine Gelenkverbindung 12 angeordnet. Diese Gelenkverbindung 12 kann auch durch elastische oder elastoplastische Elemente gebildet sein. In Ruhelage steht die Achse des Auslegers 11 in einem Winkel 13 zur durch die Leiterseilachse 4 gelegten Vertikalebene 6.

Akte 85623

Richard Bergner GmbH + Co Bezugszeichenliste

1   Vorrichtung
2   Leiterseil
3   Massekörper
4   Leiterseilachse
5   Seilmitte
6   Vertikalebene
7   Massenmittelpunkt
8   Abstand
9   Seildurchmesser
10  Seilklemme
11  Ausleger
12  Gelenkverbindung
13  Winkel

1711(85023)
19.9.1985

0178641

Richard Bergner GmbH + Co, 8540 Schwabach

## Ansprüche

1. Vorrichtung zur Dämpfung der Querschwingung in über weite Strecken gespannten Seilen, insbesondere in Freileiterseilen, bestehend aus

- mindestens einem am Leiterseil (2) torsionsstarr befestigten Massekörper (3),
-- dessen Schwerpunkt außerhalb der geometrischen Leiterseilachse (4) liegt, dadurch gekennzeichnet, daß der Massenmittelpunkt (7) des Massekörpers (3) in Ruhelage außerhalb einer durch die Seilachse (4) gelegten Vertikalebene (6) liegt.

2. Vorrichtung nach Anspruch 1,

dadurch gekennzeichnet,

daß der Abstand (8) des Massenmittelpunktes (7) von der durch die Seilachse (4) verlaufenden Vertikalebene (6) größer ist als der Seildurchmesser (9).

3. Vorrichtung nach Anspruch 1 oder 2,

dadurch gekennzeichnet,

daß der Massekörper (3) am seilfernen Ende eines mittels einer Seilklemme (10) am Leiterseil (2) befestigten Auslegers (11) angeordnet ist.

4. Vorrichtung nach einem oder mehreren der vorhergehenden Ansprüche,

gekennzeichnet durch

eine Gelenkverbindung (12) zwischen Leiterseil (2) und Massekörper (3) zur Vermeidung der Übertragung von höheren Biegespannungen oder Biegemomenten auf das Leiterseil (2).

5. Vorrichtung nach Anspruch 4,

dadurch gekennzeichnet,

daß die Gelenkverbindung (12) durch elastische oder elastoplastische Mittel gebildet ist.

0178641

Fig. 1

Torsionsschwingungen

Querschwingungen

Fig. 2

Torsionsschwingungen

Querschwingungen